(19) Europäisches Patentamt / European Patent Office / Office européen des brevets

(11) **EP 4 049 947 A1**

(12) **EUROPÄISCHE PATENTANMELDUNG**

(43) Veröffentlichungstag:
**31.08.2022 Patentblatt 2022/35**

(21) Anmeldenummer: **22156934.6**

(22) Anmeldetag: **16.02.2022**

(51) Internationale Patentklassifikation (IPC):
**B65G 27/04** *(2006.01)* **B65G 27/16** *(2006.01)*
**B65H 9/00** *(2006.01)*

(52) Gemeinsame Patentklassifikation (CPC):
**B65G 27/04; B65G 27/16; B65H 5/008; B65H 9/04;**
B65H 2701/173

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **26.02.2021 DE 102021104648**

(71) Anmelder: **Trumpf Sachsen GmbH**
**01904 Neukirch (DE)**

(72) Erfinder:
• **Müller, Elisabeth**
**02681 Wilthen (DE)**
• **Gruhl, Norbert**
**02627 Hochkirch / OT Lehn (DE)**
• **Knobel, Carsten**
**02681 Wilthen (DE)**
• **Kupferschmidt, Uwe**
**02681 Schirgiswalde (DE)**

(74) Vertreter: **Kohler Schmid Möbus Patentanwälte**
**Partnerschaftsgesellschaft mbB**
**Gropiusplatz 10**
**70563 Stuttgart (DE)**

(54) **VIBRATIONSFÖRDERER ZUM FÖRDERN EINES FLÄCHIGEN WERKSTÜCKS, INSBESONDERE EINES BLECHS, IN EINER FÖRDERRICHTUNG**

(57)     Ein Vibrationsförderer (1) zum Fördern eines flächigen Werkstücks, insbesondere eines Blechs, in einer Förderrichtung (10), umfasst einen plattenartigen Werkstückträger (2), an dessen Oberseite eine Werkstückauflage (6) vorgesehen ist. Die Auflageelemente (9) der Werkstückauflage (6) stehen gegenüber dem Werkstückträger (2) an dessen Oberseite vor und sind an ihren freien Enden zur Lagerung des zu fördernden Werkstücks ausgebildet. Unter der Wirkung des zu fördernden Werkstücks sind die Auflageelemente (9) mit ihren freien Enden gegen die Wirkung einer Rückstellkraft relativ zu dem Werkstückträger (2) in der Förderrichtung (10) auslenkbar. Über eine Federanordnung (12) ist der Werkstückträger (2) an einem Werkstückträger-Widerlager (11) in der Schwerkraftrichtung (5) gelagert. Mittels eines Schwingungserzeugers (21) ist der Werkstückträger (2) unter Erzeugung einer von der Federanordnung (12) auf den Werkstückträger (2) ausgeübten Rückstellkraft mit periodischen Bewegungen relativ zu dem Werkstückträger-Widerlager (11) längs der Wirkungslinie (4) der Schwerkraft aus einer Ruhelage auslenkbar. Die Federanordnung (12) ist bei Ruhelage des Werkstückträgers (2) mit einer Vorspannkraft in der Schwerkraftrichtung (5) vorgespannt, die wenigstens ebenso groß ist wie die Gewichtskraft des zu fördernden Werkstücks.

**Fig. 1**

EP 4 049 947 A1

**Beschreibung**

Die Erfindung betrifft einen Vibrationsförderer zum Fördern eines flächigen Werkstücks, insbesondere eines Blechs, in einer Förderrichtung,

- mit einem plattenartigen Werkstückträger, der sich mit einer Platten-Hauptebene quer zu der Wirkungslinie der Schwerkraft erstreckt,
- mit einer Werkstückauflage, mit welcher der Werkstückträger an einer entgegen der Schwerkraftrichtung weisenden Oberseite versehen ist und die Auflageelemente für das zu fördernde Werkstück umfasst, die gegenüber dem Werkstückträger an dessen Oberseite vorstehen und an ihren von dem Werkstückträger abliegenden freien Enden zur Lagerung des zu fördernden Werkstücks ausgebildet sind, wobei die Auflageelemente unter der Wirkung des zu fördernden Werkstücks mit ihren freien Enden gegen die Wirkung einer Rückstellkraft relativ zu dem Werkstückträger in der Förderrichtung auslenkbar sind,
- mit einer Federanordnung, die zwischen dem Werkstückträger und einem Werkstückträger-Widerlager angeordnet und einerseits an den Werkstückträger und andererseits an das Werkstückträger-Widerlager angebunden ist, wobei der Werkstückträger über die Federanordnung an dem Werkstückträger-Widerlager in der Schwerkraftrichtung gelagert ist sowie
- mit einem Schwingungserzeuger, mittels dessen der Werkstückträger unter Erzeugung einer von der Federanordnung auf den Werkstückträger ausgeübten Rückstellkraft mit periodischen Bewegungen relativ zu dem Werkstückträger-Widerlager längs der Wirkungslinie der Schwerkraft aus einer Ruhelage auslenkbar ist.

Gattungsgemäße Vibrationsförderer sind als Flächenförderer aus der betrieblichen Praxis bekannt. Ein Vibrationsförderer der vorbekannten Art fördert ein Werkstück mit einer Förderbewegung, die sich aus einer Vielzahl von betragsmäßig kleinen Teilbewegungen des Werkstücks in der Förderrichtung zusammensetzt. Mittels eines Schwingungserzeugers wird ein an seiner Oberseite mit einer Werkstückauflage versehener Werkstückträger in eine ausschließlich vertikale Vibrationsbewegung versetzt. Bei jedem der mittels des Schwingungserzeugers entgegen der Schwerkraftrichtung erzeugten Aufwärtshübe des Werkstückträgers bewirkt das auf freien Enden von Auflageelementen der Werkstückauflage gelagerte Werkstück aufgrund seiner Massenträgheit eine Auslenkbewegung der freien Enden der Auflageelemente in der Förderrichtung. Insbesondere aufgrund der zwischen den freien Enden der Auflageelemente und dem Werkstück wirksamen Reibung schieben die Auflageelemente bei ihrer Auslenkbewegung das Werkstück in der Förderrichtung über eine Weglänge vor, die in guter Näherung dem Betrag der sich in der Förderrichtung erstreckenden Komponente der Auslenkbewegung der Auflageelemente entspricht. Der sich an einen Aufwärtshub anschließende Abwärtshub des Werkstückträgers in der Schwerkraftrichtung wird mit einer Geschwindigkeit ausgeführt, die derart hoch ist, dass das Werkstück bei dem Abwärtshub des Werkstückträgers aufgrund seiner Massenträgheit in der Position längs der Wirkungslinie der Schwerkraft verharrt, die es am Ende des vorausgegangenen Aufwärtshubs des Werkstückträgers eingenommen hat. Aufgrund der damit verbundenen Vergrößerung des Abstands zwischen dem Werkstück und dem Werkstückträger stellen sich die Auflageelemente der Werkstückauflage aufgrund einer auf sie entgegen der Förderrichtung wirkenden Rückstellkraft relativ zu dem in der vorgeschobenen Position verbleibenden Werkstück und dem Werkstückträger entgegen der Förderrichtung in ihre Position zu Beginn des vorausgegangenen Aufwärtshubs des Werkstückträgers zurück. Ein erneuter Aufwärtshub des Werkstückträgers bewirkt einen weiteren Vorschub des Werkstücks in der Förderrichtung. Die periodische Bewegung des Werkstückträgers längs der Wirkungslinie der Schwerkraft erzeugt auf diese Weise eine Werkstückbewegung über den gewünschten Förderweg in der Förderrichtung.

Die grundsätzliche Funktionsweise eines gattungsgemäßen Vibrationsförderers ist auch in DE 10 2010 032 130 A1 beschrieben.

Ausgehend von dem gattungsgemäßen Stand der Technik liegt der vorliegenden Erfindung die Aufgabe zugrunde, einen Vibrationsförderer bereitzustellen, der in der Lage ist, auch Werkstücke mit sehr großer Masse funktionssicher in der Förderrichtung zu fördern.

Erfindungsgemäß gelöst wird diese Aufgabe durch den Vibrationsförderer gemäß Patentanspruch 1.

Im Falle der Erfindung ist die zwischen dem Werkstückträger und dem Werkstückträger-Widerlager angeordnete Federanordnung bei Ruhelage des Werkstückträgers mit einer Vorspannkraft in der Schwerkraftrichtung vorgespannt, die wenigstens ebenso groß ist wie die Gewichtskraft des zu fördernden Werkstücks.

Aufgrund dieses Merkmals ist an dem erfindungsgemäßen Werkstückträger insbesondere auch bei der Förderung von Werkstücken mit einer großen Masse die Lage des Werkstückträgers längs der Wirkungslinie der Schwerkraft unabhängig von der Masse des zu fördernden Werkstücks. Dieser Umstand ist insbesondere dann von Vorteil, wenn der erfindungsgemäße Vibrationsförderer in eine übergeordnete Anlage integriert ist und dort mit seinem Werkstückträger gegenüber weiteren Komponenten der Anlage definiert positioniert sein muss.

Bei einer entsprechenden Bemessung der Vorspannung der Federanordnung ergibt sich eine Unabhängigkeit der Ruheposition des Werkstückträgers längs der Wirkungslinie der Schwerkraft von der Masse des Förderguts auch dann, wenn die Masse der zu fördernden Werkstücke variiert. Zu diesem Zweck muss lediglich der Betrag der Vorspannkraft, mit welcher die Federanordnung in der Schwerkraftrichtung vorgespannt ist, mindestens so groß sein wie der Betrag der Gewichtskraft des zu fördernden Werkstücks mit der größten Masse.

Darüber hinaus bewirkt die erfindungsgemäße Vorspannung der Federanordnung zwischen dem Werkstückträger und dem Werkstückträger-Widerlager insbesondere auch bei der Förderung von Werkstücken mit einer großen Masse, etwa einer Masse in der Größenordnung von Tonnen, eine Verminderung des Einflusses einer Änderung der Masse des zu fördernden Werkstücks auf die Eigenfrequenz des schwingenden Gesamtsystems. Dadurch wiederum vereinfacht sich die Abstimmung des erfindungsgemäßen Vibrationsförderers auf wechselnde Förderaufgaben.

Die Eigenfrequenz eines ungedämpft schwingenden Ein-Masse-Feder-Systems wird durch die folgende Gleichung beschrieben:

$$\omega_0 = \sqrt{\frac{k}{m}}$$

Mit $\omega_0$ = Eigenfrequenz; $k$ = Federkonstante; $m$ = Masse.

In guter Näherung ist die Masse $m$ an dem erfindungsgemäßen Vibrationsförderer ohne Vorspannung der Federanordnung die Summe aus der Masse des Werkstückträgers und aus der Masse des zu fördernden Werkstücks. Die Masse des Werkstückträgers ist konstant. In der betrieblichen Praxis variieren kann die Masse des zu fördernden Werkstücks. Eine Vorspannung der Federanordnung ist gleichbedeutend mit einer Vergrößerung der Masse $m$.

Ändert sich die Masse des zu fördernden Werkstücks, so wirkt sich diese Änderung auf die Eigenfrequenz des schwingenden Gesamtsystems umso weniger aus, je kleiner das Verhältnis zwischen der Massenänderung einerseits und der Summe aus der Vorspannung der Federanordnung und der Masse des Werkstückträgers andererseits ist. Bei entsprechender, sich an der Masse des zu fördernden Werkstücks orientierender Bemessung der Vorspannung der Federanordnung bleibt folglich die Eigenfrequenz des schwingenden Gesamtsystems nahezu konstant, wenn sich die Masse des zu fördernden Werkstücks ändert.

Zur Auslegung für die funktionssichere Förderung eines Werkstücks mit einer definierten Masse sind an einem Vibrationsförderer der vorliegenden Art die Eigenfrequenz des Gesamtsystems und die mittels des Schwingungserzeugers erzeugte Erregerfrequenz aufeinander abzustimmen.

Bleibt nun aber die Eigenfrequenz des Gesamtsystems ungeachtet einer Änderung der Masse des zu fördernden Werkstücks annähernd konstant, so kann eine einmal vorgenommene gegenseitige Abstimmung der Eigenfrequenz und der Erregerfrequenz trotz der Änderung der Masse des zu fördernden Werkstücks beibehalten werden.

Eine funktionssichere Werkstückförderung lässt sich an dem erfindungsgemäßen Vibrationsförderer folglich auch bei wechselnder Masse des Förderguts mit geringem Aufwand gewährleisten.

Der Werkstückträger wird vorzugsweise von einer starren Platte gebildet, die beispielsweise aus einem mit Versteifungen versehenen Blech bestehen kann.

Als Schwingungserzeuger können erfindungsgemäß insbesondere Unwuchtmotoren, Elektromagnetantriebe, Piezoaktuatoren, pneumatische Kolben- und Unwuchtvibratoren sowie pneumatische Muskeln vorgesehen sein.

Zur Dämpfung des schwingungsfähigen Gesamtsystems können bei Bedarf entsprechende Dämpfungseinrichtungen bekannter Bauart eingesetzt werden. Je nach Anwendungsfall ist aber auch denkbar, dass eine "natürliche" Dämpfung allein aufgrund auftretender Reibung zur Gewährleistung einer funktionssicheren Werkstückförderung ausreicht.

Besondere Ausführungsarten der Erfindung gemäß Patentanspruch 1 ergeben sich aus den abhängigen Patentansprüchen 2 bis 5.

Im Falle der Erfindungsbauart gemäß Patentanspruch 2 ist für die Federanordnung eine Stellvorrichtung vorgesehen, mittels derer die Vorspannkraft, mit welcher die Federanordnung bei Ruhelage des Werkstückträgers in der Schwerkraftrichtung vorgespannt ist, dem Betrag nach variabel eingestellt werden kann. Eine Anpassung des erfindungsgemäßen Vibrationsförderers an wechselnde Förderaufgaben ist aufgrund der für die Federanordnung vorgesehenen Stellvorrichtung auf einfache Art und Weise möglich.

Gemäß Patentanspruch 3 umfasst die Federanordnung des erfindungsgemäßen Vibrationsförderers im Interesse einer funktionssicheren Bereitstellung der im Einzelfall erforderlichen Vorspannung der Federanordnung wenigstens eine Schraubenfeder, vorzugsweise wenigstens eine Schraubendruckfeder, deren Federachse längs der Wirkungslinie der Schwerkraft verläuft und deren Federlänge mittels der Stellvorrichtung für die Federanordnung einstellbar ist. Ebenfalls denkbar sind beispielsweise Federanordnungen mit hydraulischen und/oder pneumatischen Federn und/oder mit Faserverbundstrukturen.

Zur Gewährleistung eines gleichmäßigen Schwingungsverhaltens ist in Weiterbildung der Erfindung vorgesehen, dass der Schwingungserzeuger Kräfte zur Auslenkung des Werkstückträgers aus der Ruhelage mittig in den Werkstückträger einleitet und dass Federeinheiten der Federanordnung bezüglich des Ortes der Krafteinleitung symmetrisch an dem Werkstückträger angeordnet sind (Patentanspruch 4).

Der erfindungsgemäße Vibrationsförderer gemäß Patentanspruch 5 zeichnet sich durch eine besonders werkstückschonende Förderung von Werkstücken aus. Die als Auflageelemente der Werkstückauflage vorgesehenen elastischen Auflageborsten können in Form von herkömmlichen Bürstenleisten an dem Werkstückträger montiert sein.

Ergänzend oder alternativ zu den anspruchsgemäßen Auflageborsten sind auch andersartige Auflageelemente denkbar. Insoweit in Frage kommen beispielsweise lamellenartige Auflageelemente, die bei Ruhelage des Werkstückträgers gegenüber der Wirkungslinie der Schwerkraft zu dem Werkstückträger hin geneigt sind und die an ihren freien Enden das zu fördernde Werkstück lagern. Ebenso wie Auflageborsten werden auch die lamellenartigen Auflageelemente unter der Wirkung der von dem Werkstückträger periodisch ausgeführten Aufwärtshübe durch das die Auflageelemente belastende Werkstück elastisch zu dem Werkstückträger hin gebogen.

Nachfolgend wird die Erfindung anhand beispielhafter schematischer Darstellungen näher erläutert. Es zeigen:

Figur 1      eine Teildarstellung einer ersten Bauart des erfindungsgemäßen Vibrationsförderers in der Seitenansicht,

Figur 2      eine stark schematisierte Darstellung zur Veranschaulichung der grundsätzlichen Funktionsweise des Vibrationsförderers gemäß Figur 1,

Figur 3a     eine zweite Bauart des erfindungsgemäßen Vibrationsförderers in der perspektivischen Draufsicht auf eine unbeladene Werkstückauflage und

Figur 3b     den Vibrationsförderer gemäß Figur 3a mit beladener Werkstückauflage.

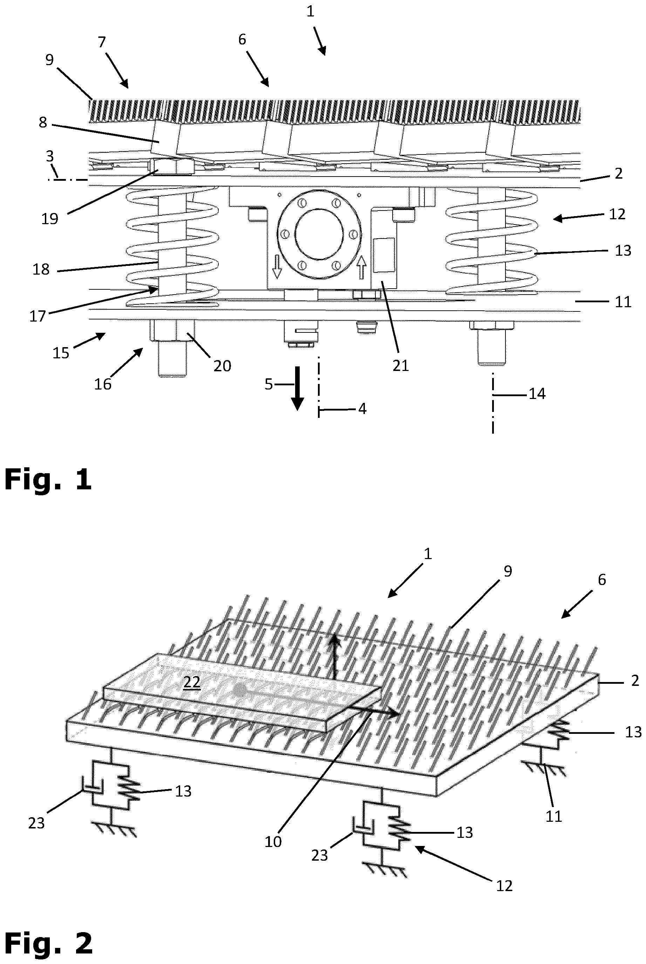

Gemäß Figur 1 umfasst ein Vibrationsförderer 1 einen horizontal ausgerichteten plattenartigen Werkstückträger 2 mit einer Platten-Hauptebene 3, die senkrecht zu der Zeichenebene von Figur 1 längs einer strichpunktierten Linie verläuft und sich dementsprechend senkrecht zu einer Wirkungslinie 4 der Schwerkraft erstreckt. Eine Schwerkraftrichtung 5 ist in Figur 1 durch einen vertikal nach unten weisenden Pfeil veranschaulicht.

Als Werkstückträger 2 ist ein mit Versteifungen versehenes biegesteifes Blech vorgesehen. An seiner Oberseite ist der Werkstückträger 2 mit einer Werkstückauflage 6 versehen, die mehrere parallel zueinander verlaufende Bürstenleisten 7 umfasst. Die Bürstenleisten 7 sind jeweils an einem Basisprofil 8 mit dem Werkstückträger 2 verschraubt. An dem Basisprofil 8 jeder der Bürstenleisten 7 ist eine Vielzahl von als Auflageelemente der Werkstückauflage 6 vorgesehenen Auflageborsten 9 angebracht. An den von dem Werkstückträger 2 abliegenden freien Enden sind die Auflageborsten 9 zur Lagerung von zu fördernden Werkstücken ausgebildet. Mit den gegenüberliegenden Längsenden sind die Auflageborsten 9 an dem jeweiligen Basisprofil 8 der betreffenden Bürstenleiste 7 gehalten.

Mit ihren freien Enden sind die Auflageborsten 9 relativ zu dem Werkstückträger 2 in der Förderrichtung 10 biegbar. Aufgrund ihrer werkstoffbedingten Elastizität führen die Auflageborsten 9 Biegebewegungen in der Förderrichtung 10 gegen die Wirkung einer Rückstellkraft aus.

An der Unterseite des Werkstückträgers 2 befindet sich ein von dem Werkstückträger 2 in der Schwerkraftrichtung 5 beabstandetes und gleichfalls plattenartiges Werkstückträger-Widerlager 11. Das Werkstückträger-Widerlager 11 verläuft parallel zu dem Werkstückträger 2 und ist relativ zu der Umgebung des Vibrationsförderers 1 ortsfest.

Zwischen dem Werkstückträger 2 und dem Werkstückträger-Widerlager 11 ist eine Federanordnung 12 angeordnet. Die Federanordnung 12 umfasst vier Federeinheiten in Form von Schraubendruckfedern 13. An jeder Ecke des Vibrationsförderers 1 ist eine der Schraubendruckfedern 13 zwischen dem Werkstückträger 2 und dem Werkstückträger-Widerlager 11 angeordnet und durch eine entsprechende Abstützung an den Werkstückträger 2 und an das Werkstückträger-Widerlager 11 angebunden. Von den insgesamt vier Schraubendruckfedern 13 sind in Figur 1 zwei und in Figur 2 drei zu erkennen. Die Schraubendruckfedern 13 verlaufen jeweils mit einer Federachse 14 längs der Wirkungslinie 4 der Schwerkraft. Über die Federanordnung 12 ist der Werkstückträger 2 an dem Werkstückträger-Widerlager 11 in der Schwerkraftrichtung 5 gelagert.

In Figur 1 ist die Werkstückauflage 6 des Vibrationsförderers 1 nicht beladen. Der Werkstückträger 2 befindet sich längs der Wirkungslinie 4 der Schwerkraft in einer Ruhelage. Die Federanordnung 12 ist bei Ruhelage des Werkstückträgers 2 mit einer Vorspannkraft in der Schwerkraftrichtung 5 vorgespannt. Der Betrag der Vorspannung der Federanordnung 12 kann mittels einer Stellvorrichtung 15 variiert werden. Die Stellvorrichtung 15 umfasst eine Stelleinheit 16 für jede der Schraubendruckfedern 13. Eine Schraube 17 jeder der Stelleinheiten 16 durchsetzt mit einem Schraubenbolzen 18 entsprechende Durchtrittsöffnungen an dem Werkstückträger 2 und an dem Werkstückträger-Widerlager 11. Zwischen dem Werkstückträger 2 und dem Werkstückträger-Widerlager 11 verlaufen die Schraubenbolzen 18 im Innern der jeweils zugeordneten Schraubendruckfeder 13 koaxial mit dieser längs der Federachse 14. Mit einem Schraubenkopf 19 liegt die Schraube 17 jeder der Stelleinheiten 16 an der Oberseite des Werkstückträgers 2 auf diesem auf. Das gegenüberliegende Längsende des Schraubenbolzens 18 ist mit einem Außengewinde versehen und trägt eine Stellmutter 20, welche an der Unterseite des Werkstückträger-Widerlagers 11 abgestützt ist.

Durch Drehen der Stellmuttern 20 der Stelleinheiten 16 lässt sich über die Länge der Schraubendruckfedern 13 längs der Federachsen 14 die Vorspannkraft einstellen, mit welcher die Federanordnung 12 bei Ruhelage des Werkstückträgers 2 in der Schwerkraftrichtung 5 vorgespannt ist.

Ein in dem dargestellten Beispielsfall als herkömmlicher pneumatischer Turbinenvibrator 21 ausgebildeter Schwingungserzeuger ist gleichfalls in dem Zwischenraum zwischen dem Werkstückträger 2 und dem Werkstückträger-Wider-lager 11 angeordnet. Der Turbinenvibrator 21 ist an dem Werkstückträger 2 fixiert. Das Werkstückträger-Widerlager 11 ist mit einem Ausschnitt versehen, so dass der Turbinenvibrator 21 nicht kollidiert sondern ungehindert mit dem Werkstückträger 2 schwingen kann.

Als in der Förderrichtung 10 zu förderndes flächiges Werkstück ist gemäß Figur 2 ein Blech 22 vorgesehen. Die Masse des Blechs 22 ist vor Beginn des Fördervorgangs bekannt.

Das Blech 22 ruht auf den freien Enden von Auflageborsten 9 der Werkstückauflage 6. Bei Ruhelage des Werkstückträgers 2 sind die Auflageborsten 9 bereits im unbelasteten Zustand gegenüber der Wirkungslinie 4 der Schwerkraft in der Förderrichtung 10 geneigt. Die von dem Blech 22 beaufschlagten Auflageborsten 9 befinden sich bei Ruhelage des Werkstückträgers 2 in einer Ausgangsstellung, in welcher sie unter der Wirkung der Gewichtskraft des Blechs 22 und gegen die Wirkung einer Rückstellkraft gegenüber der Schrägstellung im unbelasteten Zustand in Richtung auf den Werkstückträger 2 gebogen sind.

Zur Bewegung des Blechs 22 in der Förderrichtung 10 wird der Turbinenvibrator 21 eingeschaltet.

In an sich bekannter Weise erzeugt der Turbinenvibrator 21 im Zusammenspiel mit der Federanordnung 12 eine ausschließlich längs der Wirkungslinie 4 der Schwerkraft ausgeführte Vibrationsbewegung des Werkstückträgers 2 relativ zu dem ortsfesten Werkstückträger-Widerlager 11. Dabei lenkt der Turbinenvibrator 21 den Werkstückträger 2 mit periodischen Bewegungen aus der Ruhelage in der Schwerkraftrichtung 5 aus. Die mittels des Turbinenvibrators 21 erzeugten Abwärtshübe des Werkstückträgers 2 relativ zu dem Werkstückträger-Widerlager 11 werden gegen die Wirkung einer aufgrund der Auslenkbewegung des Werkstückträgers 2 von der Federanordnung 12 ausgeübten Rückstellkraft ausgeführt.

Aufgrund der von der Federanordnung 12 erzeugten Rückstellkraft führt der Werkstückträger 2 nach jedem Abwärtshub einen in Figur 2 durch einen Pfeil symbolisierten Aufwärtshub entgegen der Schwerkraftrichtung 5 aus.

Bei jedem der Aufwärtshübe des Werkstückträgers 2 bewirkt das auf den Auflageborsten 9 der Werkstückauflage 6 gelagerte Blech 22 aufgrund seiner Massenträgheit und der daraus resultierenden Bewegung des Werkstückträgers 2 in Richtung auf das Blech 22 eine Auslenkbewegung der freien Enden der Auflageborsten 9 aus der Ausgangsstellung in der Förderrichtung 10. Insbesondere aufgrund der zwischen den freien Enden der Auflageborsten 9 und dem Blech 22 wirksamen Reibung schieben die Auflageborsten 9 bei ihrer Auslenkbewegung das Blech 22 in der Förderrichtung 10 über eine Weglänge vor, die in guter Näherung dem Betrag der sich in der Förderrichtung 10 erstreckenden Komponente der Auslenkbewegung der Auflageborsten 9 entspricht.

Der sich an jeden Aufwärtshub des Werkstückträgers 2 anschließende und mittels des Turbinenvibrators 21 erzeugte Abwärtshub des Werkstückträgers 2 in der Schwerkraftrichtung 5 wird mit einer Geschwindigkeit ausgeführt, die derart bemessen ist, dass das Blech 22 aufgrund seiner Massenträgheit bei dem Abwärtshub des Werkstückträgers 2 in der Position verharrt, die es am Ende des vorausgegangenen Aufwärtshubs längs der Wirkungslinie 4 der Schwerkraft eingenommen hat. Aufgrund der damit verbundenen Vergrößerung des Abstands zwischen dem Blech 22 und dem Werkstückträger 2 stellen sich die bei dem vorausgegangenen Aufwärtshub von dem Blech 22 beaufschlagten und elastisch in der Förderrichtung 10 gebogenen Auflageborsten 9 relativ zu dem Blech 22 und dem Werkstückträger 2 entgegen der Förderrichtung 10 in ihre Ausgangsstellung zu Beginn des vorausgegangenen Aufwärtshubs zurück.

Ein erneuter Aufwärtshub des Werkstückträgers 2 bewirkt einen weiteren Vorschub des Blechs 22 in der Förderrichtung 10. Die Vibration des Werkstückträgers 2 längs der Wirkungslinie 4 der Schwerkraft erzeugt auf diese Weise eine Förderbewegung des Blechs 22 in der Förderrichtung 10.

Damit die Position, welche der Werkstückträger 2 in der Ruhelage längs der Wirkungslinie 4 der Schwerkraft einnimmt, unabhängig ist von der Masse des Blechs 22, ist die Federanordnung 12 durch entsprechende Einstellung der Schraubendruckfedern 13 mittels der Stelleinheiten 16 bei Ruhelage des Werkstückträgers 2 in der Schwerkraftrichtung 5 mit einer Vorspannkraft vorgespannt, die wenigstens ebenso groß ist wie die Gewichtskraft des zu fördernden Blechs 22. In dem dargestellten Beispielsfall ist der Betrag der Vorspannung der Federanordnung 12 in der Schwerkraftrichtung 5 deutlich größer als der Betrag der Gewichtskraft des Blechs 22. Infolgedessen behält der Werkstückträger 2 seine definierte Lage längs der Wirkungslinie 4 der Schwerkraft auch dann bei, wenn anstelle des Blechs 22 ein Blech mit einer Masse in der Förderrichtung 10 zu bewegen ist, welche die Masse des Blechs 22 übersteigt.

Aufgrund der Vorspannung der Federanordnung 12 kann die vor Beginn der Förderung des Blechs 22 vorgenommene gegenseitige Abstimmung der Eigenfrequenz des Gesamtsystems und der mittels des Turbinengenerators 21 erzeugten Erregerfrequenz ungeachtet einer Vergrößerung der Masse des zu fördernden Blechs beibehalten werden. Die Eigenfrequenz kann beispielsweise in der Größenordnung von 100 Hz liegen. Die Erregerfrequenz wird derart auf die Eigenfrequenz abgestimmt, dass sich eine gleichförmige Förderbewegung des Blechs 22 in der Förderrichtung 10 einstellt.

In Figur 2 mit dem Bezugszeichen "23" angedeutet ist eine Dämpfung des schwingungsfähigen Gesamtsystems. Im Falle des Vibrationsförderers 1 ist zu diesem Zweck allerdings keine separate Dämpfungsvorrichtung vorgesehen. Zur Dämpfung des dargestellten Systems reicht vielmehr die natürliche und auf Reibung beruhende Eigendämpfung des Systems aus.

Eine Führung des Werkstückträgers 2 bei dessen Vibrationsbewegung längs der Wirkungslinie 4 der Schwerkraft wird in dem dargestellten Beispielsfall ausschließlich durch die Schrauben 17 der Stelleinheiten 16 für die Federanordnung 12 bewirkt. Ergänzend oder alternativ besteht die Möglichkeit, zur Führung des Werkstückträgers 2 längs der Wirkungslinie 4 der Schwerkraft zusätzliche Führungseinrichtungen vorzusehen.

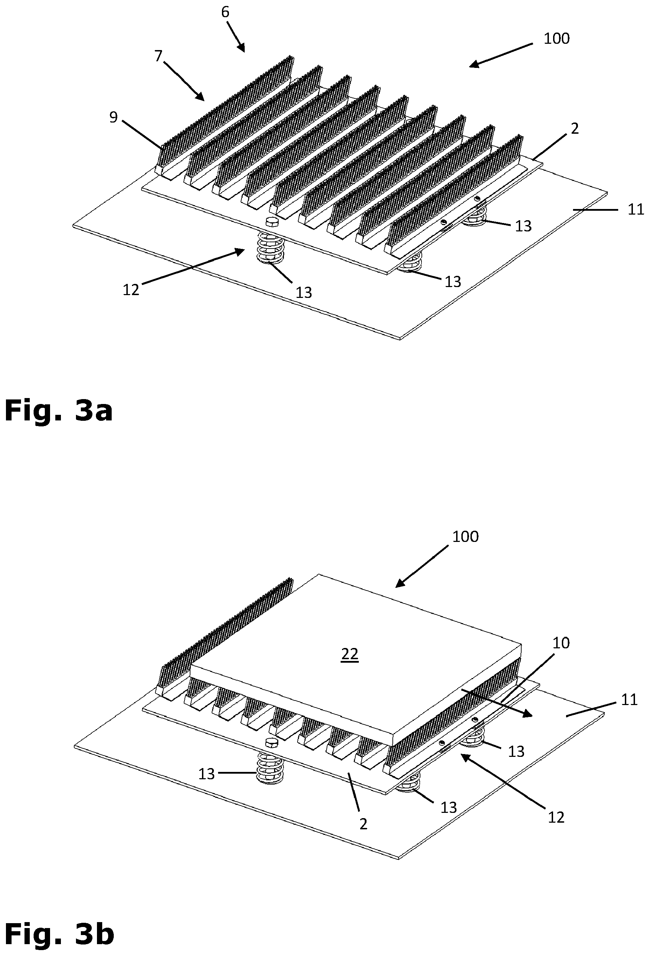

Ein Vibrationsförderer 100, wie er in den Figuren 3a und 3b dargestellt ist, unterscheidet sich von dem Vibrationsförderer 1 gemäß Figur 1 lediglich durch die Beschaffenheit der Federanordnung 12. Anstelle von vier Schraubendruckfedern 13 wie im Falle des Vibrationsförderers 1 sind an dem Vibrationsförderer 100 als Federeinheiten insgesamt sechs Schraubendruckfedern 13 vorgesehen. Von den sechs Schraubendruckfedern 13 sind in den Figuren 3a und 3b drei Schraubendruckfedern 13 zu erkennen. Drei weitere Schraubendruckfedern 13 sind in den Figuren 3a und 3b durch den Werkstückträger 2 verdeckt. Dabei liegt der an der vorderen Kante des Werkstückträgers 2 angeordneten Schraubendruckfeder 13 an der gegenüberliegenden Kante des Werkstückträgers 2 eine baugleiche Schraubendruckfeder 13 gegenüber. Entsprechend sind an der Kante des Werkstückträgers 2, welche der in den Figuren 3a und 3b erkennbaren seitlichen Kante des Werkstückträgers 2 gegenüberliegt, ebenfalls zwei Schraubendruckfedern 13 angeordnet. Ein Turbinenvibrator ist auch an dem Vibrationsförderer 100 zwischen dem Werkstückträger 2 und dem Werkstückträger-Widerlager 11 vorgesehen. Dabei ist der Turbinenvibrator an dem Werkstückträger 2 mittig angeordnet. Die sechs Schraubendruckfedern 13 der Federanordnung 12 sind bezüglich des Turbinenvibrators symmetrisch an dem Werkstückträger 2 positioniert.

**Patentansprüche**

1. Vibrationsförderer zum Fördern eines flächigen Werkstücks (22), insbesondere eines Blechs, in einer Förderrichtung (10),

   • mit einem plattenartigen Werkstückträger (2), der sich mit einer Platten-Hauptebene (3) quer zu der Wirkungslinie (4) der Schwerkraft erstreckt,

   • mit einer Werkstückauflage (6), mit welcher der Werkstückträger (2) an einer entgegen der Schwerkraftrichtung (5) weisenden Oberseite versehen ist und die Auflageelemente (9) für das zu fördernde Werkstück (22) umfasst, die gegenüber dem Werkstückträger (2) an dessen Oberseite vorstehen und an ihren von dem Werkstückträger (2) abliegenden freien Enden zur Lagerung des zu fördernden Werkstücks (22) ausgebildet sind, wobei die Auflageelemente (9) unter der Wirkung des zu fördernden Werkstücks (22) mit ihren freien Enden gegen die Wirkung einer Rückstellkraft relativ zu dem Werkstückträger (2) in der Förderrichtung (10) auslenkbar sind,

   • mit einer Federanordnung (12), die zwischen dem Werkstückträger (2) und einem Werkstückträger-Widerlager (11) angeordnet und einerseits an den Werkstückträger (2) und andererseits an das Werkstückträger-Widerlager (11) angebunden ist, wobei der Werkstückträger (2) über die Federanordnung (12) an dem Werkstückträger-Widerlager (11) in der Schwerkraftrichtung (5) gelagert ist sowie

   • mit einem Schwingungserzeuger (21), mittels dessen der Werkstückträger (2) unter Erzeugung einer von der Federanordnung (12) auf den Werkstückträger (2) ausgeübten Rückstellkraft mit periodischen Bewegungen relativ zu dem Werkstückträger-Widerlager (11) längs der Wirkungslinie (4) der Schwerkraft aus einer Ruhelage auslenkbar ist,

   **dadurch gekennzeichnet, dass** die Federanordnung (12) bei Ruhelage des Werkstückträgers (2) mit einer Vorspannkraft in der Schwerkraftrichtung (5) vorgespannt ist, die wenigstens ebenso groß ist wie die Gewichtskraft des zu fördernden Werkstücks (22).

2. Vibrationsförderer nach Anspruch 1, **dadurch gekennzeichnet, dass** für die Federanordnung (12) eine Stellvorrichtung (15) vorgesehen ist, mittels derer die Vorspannkraft, mit welcher die Federanordnung (12) bei Ruhelage des Werkstückträgers (2) in der Schwerkraftrichtung (5) vorgespannt ist, dem Betrag nach variabel einstellbar ist.

3. Vibrationsförderer nach Anspruch 2, **dadurch gekennzeichnet, dass** die Federanordnung (12) wenigstens eine Schraubenfeder, vorzugsweise wenigstens eine Schraubendruckfeder, umfasst, die eine längs der Wirkungslinie (4) der Schwerkraft verlaufende Federachse (14) aufweist und die sich mit einer Federlänge längs der Federachse (14) erstreckt und dass mittels der Stellvorrichtung (15) für die Federanordnung (12) die Federlänge der Schraubenfeder längs der Federachse (14) einstellbar ist.

4. Vibrationsförderer nach einem der vorhergehenden Ansprüche, **dadurch gekennzeichnet, dass** mittels des Schwingungserzeugers (21) eine Kraft zur Auslenkung des Werkstückträgers (2) aus der Ruhelage in den Werkstückträger (2) an einem Ort der Krafteinleitung einleitbar ist, der an dem Werkstückträger (2) mittig angeordnet ist und dass die Federanordnung (12) mehrere Federeinheiten (13) umfasst, an welche der Werkstückträger (2) an Stellen angebunden ist, die bezüglich des Ortes der Krafteinleitung symmetrisch an dem Werkstückträger (2) angeordnet sind.

5. Vibrationsförderer nach einem der vorhergehenden Ansprüche, **dadurch gekennzeichnet, dass** als Auflageelemente (9) der Werkstückauflage (6) Auflageborsten vorgesehen sind, die bei Ruhelage des Werkstückträgers (2) mit einer Ausgangsstellung gegenüber der Wirkungslinie (4) der Schwerkraft in der parallel zu der Platten-Hauptebene (3) des Werkstückträgers (2) verlaufenden Förderrichtung (10) geneigt sind und die unter der Wirkung des zu fördernden Werkstücks (22) relativ zu dem Werkstückträger (2) aus der Ausgangsstellung elastisch in der Förderrichtung (10) biegbar sind.

**Fig. 1**

**Fig. 2**

**Fig. 3a**

**Fig. 3b**

Europäisches Patentamt
European Patent Office
Office européen des brevets

# EUROPÄISCHER RECHERCHENBERICHT

**Nummer der Anmeldung**

EP 22 15 6934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S63 247218 A (ISEKI AGRICULT MACH) 13. Oktober 1988 (1988-10-13) * Abbildungen 1-3 * | 1,4 | INV. B65G27/04 B65G27/16 B65H9/00 |
| X | US 6 347 698 B1 (MAGARI SEAN A [US]) 19. Februar 2002 (2002-02-19) * Abbildungen 1,8 * | 1,5 | |
| Y | IT RM 960 820 A1 (GEN KINEMATICS CORP [US]) 29. Mai 1998 (1998-05-29) * Abbildung 2 * | 1-5 | |
| Y | DE 27 12 764 A1 (LIPE ROLLWAY CORP) 13. Oktober 1977 (1977-10-13) * das ganze Dokument * | 1-5 | |
| A | DE 12 79 988 B (KARL HEINZ WEHMEIER DR ING) 10. Oktober 1968 (1968-10-10) * Abbildung 1 * | 1-5 | |

**RECHERCHIERTE SACHGEBIETE (IPC)**

B65G
B65H

Der vorliegende Recherchenbericht wurde für alle Patentansprüche erstellt

| Recherchenort | Abschlußdatum der Recherche | Prüfer |
|---|---|---|
| Den Haag | 30. Juni 2022 | Pedersen, Henrik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 15 6934

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-06-2022

| Im Recherchenbericht angeführtes Patentdokument | Datum der Veröffentlichung | Mitglied(er) der Patentfamilie | | Datum der Veröffentlichung |
|---|---|---|---|---|
| JP S63247218 A | 13-10-1988 | KEINE | | |
| US 6347698 B1 | 19-02-2002 | KEINE | | |
| IT RM960820 A1 | 29-05-1998 | DE | 19650771 A1 | 12-06-1997 |
| | | GB | 2307892 A | 11-06-1997 |
| | | IT | RM960820 A1 | 29-05-1998 |
| | | JP | 3842355 B2 | 08-11-2006 |
| | | JP | H09175622 A | 08-07-1997 |
| | | US | 5713457 A | 03-02-1998 |
| DE 2712764 A1 | 13-10-1977 | DE | 2712764 A1 | 13-10-1977 |
| | | FR | 2346253 A1 | 28-10-1977 |
| | | GB | 1539000 A | 24-01-1979 |
| | | JP | S5724285 B2 | 24-05-1982 |
| | | JP | S52118780 A | 05-10-1977 |
| DE 1279988 B | 10-10-1968 | KEINE | | |

Für nähere Einzelheiten zu diesem Anhang : siehe Amtsblatt des Europäischen Patentamts, Nr.12/82

EP 4 049 947 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010032130 A1